# EUROPEAN PATENT SPECIFICATION

(11) **EP 3 718 408 B1**
(45) Date of publication and mention of the grant of the patent: **03.09.2025**
(21) Application number: 20168879.3
(22) Date of filing: 23.06.2014
(51) Int. Cl.: A23F 5/38, A23G 1/56

(54) **SOLUBLE BEVERAGE MASS**
LÖSLICHE GETRÄNKEMASSE
PÂTE DE BOISSON SOLUBLE

(30) Priority: 24.06.2013 GB 201311187
(43) Date of publication of application: 07.10.2020
(62) Divisional of application: 14777768.4
(73) Proprietor: Koninklijke Douwe Egberts B.V., 3532 AD Utrecht (NL)
(72) Inventor: KANG, Won Cheal, Headington, Oxfordshire OX3 8SF (GB); SULEMANJI, Nawaz, Thurmaston, Leicestershire LE4 8BB (GB); EGER, Tharany, Elizabeth, Banbury, Oxfordshire OX16 0SX (GB); ZIER, Maxi, 80335 Bavaria (DE); DIMOULA, Myrto, Banbury, Oxfordshire OX16 5AA (GB); NCHARI, Luanga, Bicester, Oxfordshire OX26 6YE (GB); FOX, Simon, Stratford upon Avon, Warwickshire CV37 7HW (GB)
(74) Representative: Boult Wade Tennant LLP

(56) References cited:
- EP-A1- 1 815 750
- WO-A1-2010/115697
- WO-A1-2013/001052
- WO-A2-2006/065141
- US-A- 3 293 041

## Description

This disclosure relates to soluble beverage masses and to methods of producing them. In particular, the disclosure relates to soluble beverage masses for producing beverages such as instant coffee or hot chocolate.

There has developed a considerable market for consumers who wish to prepare beverages at home to replicate the beverages available in cafes and restaurants. While a number of approaches to providing these drinks require the use of a beverage preparation machine, such as a cartridge- or pad-using system, it is more convenient for consumers to use instant or soluble beverage ingredients, such as freeze-dried coffee granules.

While ingredients such as soluble coffee granules have a number of advantages, such as allowing fine-tuning of the beverage strength, it also provides an opportunity for significant variance in the final beverage quality. In order to address this problem it has been suggested to provide the soluble beverage ingredients in a tablet form. This ensures that each beverage produced is identical and of the high quality intended by the beverage ingredient manufacturer.

However, the provision of ingredients in tablet form has not yet been perfected. In particular, there are commonly problems with the dissolution of the ingredients; the presence of a slimy undissolved residue at the bottom of a beverage is not appealing for consumers. Tablets are commonly formed using a powdered ingredient since this avoids drying issues and allows for easier shaping. In order to produce a tablet of, for example, coffee, it is generally necessary to either provide considerable compaction or use a binder to hold a soluble coffee powder together. However, the high compaction can prevent the tablet from dissolving and the presence of a binder can cause similar problems or affect the flavour of the final beverage.

For tablets prepared with low compression and/or without the use of a suitable binder, there is a further risk of damage or fracturing of the tablet. This is especially the case for pellets with sharp edges; the chance of fracturing, leading to a loss of the original shape, is increased. If the consumer opens a tube of tablets and finds that they are chipped or broken, then the impression of quality is significantly diminished.

WO2010115697 discloses a method for the production of instant beverage products.

WO2013/001052 discloses a method for manufacturing a soluble coffee tablet.

EP1815750 discloses a foam including coffee as main ingredient is distributed in a mold and subsequently solidified through freeze-drying.

WO2006065141 discloses a method for manufacturing products comprising a medicine.

WO2013001052 seeks to address these problems by moistening the outer surface to form a thick protective skin.

US3293041 describes a method for the manufacture of highly-soluble self-supporting tablets. These tablets are small 1g pellets of soluble coffee or tea, and are prepared by compression in a heat-treatment zone of a pelletiser. The pellets are quickly produced (2 to 3 seconds) using high temperatures (118 to 150°C) and low pressures (13kPa to 28kPa) and the final product dissolves completely in 2 to 6 seconds. As a results of the manufacturing process, the pellets are low density with a protective outer crust. One embodiment of the method relies on a rotary mould which necessarily results in a brief intense application of heat and pressure to form the pellet. Similarly, the primary embodiment of this document using a tube cavity relies on fast processing times to ensure that a sufficiently fast production rate can be achieved.

Furthermore, there exists a prejudice amongst consumers who consider soluble coffee products, especially spray-dried coffee, to be inferior to the coffee produced in cafes or produced in beverage machines. For all of these reasons, therefore, the use of tablets as a distribution form for beverage ingredients has not been popular amongst consumers.

Accordingly, it is desirable to provide a new form for beverage ingredients and a method for making them and/or to tackle at least some of the problems associated with the prior art or, at least, to provide a commercially useful alternative thereto.

Accordingly, in a first aspect the present disclosure provides a method for producing a soluble beverage mass having a weight of from 2 to 20g, the method comprising:
providing one or more soluble beverage ingredients in powder form,
providing a pre-heated mould having a mould-cavity preheated to a surface temperature greater than the Tg of the one or more soluble beverage ingredients,
loading the mould-cavity with the one or more of the soluble beverage ingredients, and
compressing the one or more soluble beverage ingredients in the mould-cavity to form a soluble beverage mass,
wherein
   the one or more soluble beverage ingredients are retained within the mould-cavity for 15 to 120 seconds.

The present invention will now be further described.

The present inventors have found a new approach for producing soluble beverage masses:
discrete bodies of ingredients suitable for forming beverages. By the term "soluble beverage mass" it is meant a discrete body formed from ingredients which are themselves fully soluble in a beverage medium and which serve to provide said medium with the flavour and consistency of a desired beverage. It should be understood that a soluble beverage mass is intended to cover, for example, tablets, lozenges and balls having a specifically determined shape and size. It is not intended to cover, for example, loose powders of beverage ingredients, such as freeze-dried coffee or milk powders. Obviously, the soluble beverage mass is in a substantially dry, not-yet dissolved form suitable for dissolution. Preferably the masses are provided in sealed air- and moisture-tight containers.

It should also be appreciated that the soluble beverage mass may contain a minority of insoluble material. For example, finely ground roasted coffee may be included to provide a unique mouthfeel and flavour in the final beverage. Preferably, in order to avoid sediment or other problems, the mass contains less than 30wt%, more preferably less than 20wt%, more preferably less than 10wt% of insoluble materials. In some embodiments, such as hot chocolate beverages, it may be preferred that there is substantially no insoluble material, so as to provide a smooth mouthfeel.

While this disclosure is provided primarily in relation to coffee beverages, it will be appreciated that the method and advantages apply equally to the other suitable beverage ingredients discussed herein.

The present inventors have sought to provide a premium beverage product, particularly a coffee product, with all of the convenience of soluble products, while avoiding the various disadvantages of and prejudices against such products. Specifically, the inventors have sought to provide a beverage ingredient which provides a consistent final beverage, without requiring a dispensing machine and which is easily stored, transported and used.

It has already been recognised that tablets address several of these problems, but it has never been possible to produce a tablet which is sufficiently acceptable to consumers to attract consumers who typically prefer fresh from roast and ground coffee beverages.

It is considered that there is a certain amount of ceremony and associated preparation involved in the preparation of a final beverage from roast and ground coffee. The consumer of such beverages associates this effort in the preparation with the beneficial properties of the final beverage. In contrast, soluble coffee beverages are prepared in an instant with the addition of hot water. The present inventors have now recognised that the instantaneous nature of soluble coffees may contribute to the prejudice against such products. Accordingly, while of course seeking to avoid residues and deposits within the final beverage, the inventors have realised that some control of the dissolution time is desirable.

Accordingly, it is thought to be ideal if the beverage can take at least 10 seconds and no more than 100 seconds, preferably no more than 60 seconds to prepare following the addition of a hot aqueous medium to the ingredients. Preferably the preparation takes from 20 to 40 seconds for the full dissolution to occur with gentle stirring of the combined medium and ingredients.

The present inventors have analysed the tablets known in the prior art and have found that tablets formed by conventional heating techniques have a very different internal structure compared to the masses of the present disclosure. Specifically, highly compressed tablets have a homogeneous but brittle and unfused internal structure. They typically have a very slow dissolution time. Tablets which rely on added binders tend to have unnecessary mass and the flavour of the final beverage may be affected by any binder residue.

The present inventors have found that the methods of the present disclosure provide a sufficiently robust mass having a good cohesiveness. This ensures that the mass is sufficiently robust for manufacture (transport on conveyor belts), transport and handling, while providing a good dissolution rate.

The method of the present disclosure comprises a number of steps. In a first step, one or more soluble beverage ingredients are provided in powder form. By powder form it is meant to include finely divided dry particulate matter and granules such as spray dried particles, freeze-dried particles and agglomerates thereof. Typically the particulate material will have a particle size of less than 3mm, more preferably from 2.5mm to 10 microns, more preferably from 1mm to 300 microns and more preferably about 500 to about 700 microns. Such particles are well known in the art. Examples of suitable materials are discussed in more detail below. Surprisingly, due to the method of manufacture disclosed herein, the dissolution properties of the masses reflect those of the starting material because the structure of the starting powder is not significantly changed. The use of a powder form of the ingredients aids in the ready and reproducible filling of the mould cavity.

The apparatus used for performing the present method is also very important. The apparatus comprises a mould having a mould-cavity. This mould is preheated so that a contact surface of the mould cavity, which in use contacts the soluble beverage ingredients, is at an elevated temperature. The mould cavity is loaded with the one or more of the soluble beverage ingredients so that they contact the preheated contact surface at an elevated temperature. The present inventors have found that this serves to provide a more resilient soluble beverage mass than would be achieved if the mould was not preheated. That is, the use of a preheated mould makes the mass more resistant to breakage when transported and handled following manufacture.

The mould may be provided with a lining to aid in the removal of the soluble beverage masses after formation. The various components of the mould, the lid and any mould lining are preferably each formed of a dielectric material. This is advantageous because the dielectric material can be readily pre-heated and/or heated with RF radiation. This means that the surfaces of the mould-cavity can be heated with a single RF heat source, simplifying the production method. Suitable dielectric materials include PVDF or a polymer, such as silicone, containing particles of carbon black.

The soluble beverage ingredients are loaded into the preheated mould. A lid or closure is then typically applied and this can be used to apply the compression to the ingredients. Preferably the lid or closure is preheated to the same temperature as the mould-cavity.

The compression step serves to compress the one or more soluble beverage ingredients in the mould-cavity to form a soluble beverage mass. The compression step helps to fuse the ingredients together.

The inventors have found that it is possible to provide an improved product which has the desired dissolution properties discussed above by ensuring that there is a cohesive internal structure throughout the mass, which allows for a robust product with ready dissolution. They have found that this can be achieved by ensuring consistent heating which extends throughout the mass and that this can be achieved by one of several approaches.

### RF heating

Firstly, the method may further comprise applying RF radiation to heat the soluble beverage ingredients in the mould-cavity. The use of RF heating permeates the entire mass of the soluble beverage powder and provides a particularly homogeneous internal structure. The heating technique is fast and suitable for use on all beverage ingredients; it can raise the temperature of the entire beverage mass.

In this aspect, once the soluble beverage ingredients have been loaded into the mould-cavity, radio-frequency (RF) is applied to heat the soluble beverage ingredients in the mould-cavity. The use of RF heating has been found to provide even heating throughout the ingredients. This helps to fuse the ingredients without causing clumping and while ensuring a light homogeneous structure which dissolves readily. Once the soluble beverage ingredients have been heated, they are compressed within the mould-cavity to form a soluble beverage mass. The compression step helps to fuse the heated ingredients together.

RF heating techniques are well known. RF, also known as dielectric heating, is a process in which a high-frequency alternating electric field, or radio wave or microwave heats a dielectric material. At higher frequencies, this heating is caused by molecular dipole rotation within the dielectric. The RF heating described herein encompasses microwave heating (up to around 2.5GHz) and can typically be carried out at a frequency in the range of from 10 to 100Mhz, more preferably from 10 to 45Mhz and most preferably from 25 to 30MHz. Most preferred are frequencies of 13.56, 27.12 and 40.68 MHz.

Preferably the method further comprises a step of compressing the one or more soluble beverage ingredients in the mould-cavity before the step of applying RF radiation to heat the one or more soluble beverage ingredients in the mould-cavity. That is, the ingredients are loaded into the mould onto the preheated contact surface of the mould, compressed, heated with RF radiation, and then compressed again. This initial compression step serves to evenly distribute the material loaded into the mould-cavity.

Various components of the mould, the lid and any mould lining are preferably each formed of a dielectric material. This is advantageous because the dielectric material can be readily heated with RF radiation. This means that the surfaces of the mould-cavity can be heated with a single RF heat source, simplifying the production method. At the same time, the use of dielectric materials allows for the provision of the pre-heating and maintains the walls of the mould at a temperature above that achieved at the centre of the mould. Suitable dielectric materials include PVDF or a polymer, such as silicone, containing particles of carbon black.

Preferably, in the step of applying RF radiation to heat the one or more soluble beverage ingredients, the one or more soluble beverage ingredients are heated close to their glass transition temperature (Tg). The ingredients should not be heated above their melting temperature since this would lead to a very high-density insoluble product. Preferably the one or more soluble beverage ingredients are heated to within 10°C, preferably within 5°C below their glass transition temperature (Tg). This provides sufficient temperature to fuse the particles together, while not unduly heating the ingredients which could cause decomposition or spoiling of the final beverage flavours.

The Tg is the reversible transition in amorphous materials (or in amorphous regions within semicrystalline materials) from a hard and relatively brittle state into a molten or rubber-like state. This is distinct from the melting point of the material and serves to render the material tacky. Tg's are highly dependent on moisture content and are well known in the art. By heating the powders close to the Tg they can be made to bind together. It should be noted that certain materials do not have a Tg, such as sugar which is crystalline. Preferably the soluble beverage ingredients described herein are heated to reach a temperature relative to at least the Tg of the major ingredient in a mixture, or the ingredients may be selected to have similar Tg values before producing the mass. By major ingredient it is meant the ingredient which is present in the greatest amount by weight in a mixture. As a general rule of thumb, Tg values tend to be approximately 2/3 of the melting point of a material.

Preferably, in the step of applying RF radiation to heat the one or more soluble beverage ingredients, the RF heating is applied at a frequency of 27.12MHz and/or for a duration of from 10 seconds to 1 minute, preferably for a duration of 20 to 30 seconds. The use of RF heating allows for much reduced heating times compared to conventional electrical resistance heating methods.

Preferably the optional step of compressing the one or more soluble ingredients before the step of applying RF to heat the one or more soluble beverage ingredients reduces the volume of the soluble beverage ingredients to from 60 to 90%, preferably 70 to 90% of the pre-heated volume. That is, the volume of the final beverage mass should be at least 60% and at most 90% of the uncompressed initial volume of the soluble beverage ingredients loaded into the mould-cavity. This extent of compression has been found to provide a more even final product shape.

Preferably the step of compressing the one or more soluble ingredients after the step of applying RF to heat the one or more soluble beverage ingredients reduces the volume of the soluble beverage ingredients to from 20 to 80% of the pre-heated volume. That is, the volume of the final beverage mass should be at least 20% and at most 80% of the uncompressed initial volume of the soluble beverage ingredients loaded into the mould-cavity. This extent of compression has been found to provide a consistent product with a suitable dissolution time. Preferably the compression is to from 35 to 55%.

### Heat-treatment time

The one or more soluble beverage ingredients are retained within the preheated mould-cavity for 15 to 120 seconds. This relatively slow processing time for such a mass-production of beverage ingredients ensures that the warmth of the mould penetrates into the structure of the mass and results in a cohesive final product.

Preferably, the soluble beverage ingredients are held within the mould for from 30 to 100 seconds and more preferably from 40 to 80 seconds. Without wishing to be bound by theory, it is considered that this duration allows heat from the pre-heated mould to permeate through the mass and cause a more consistent internal structure. It is considered that a shorter time, particularly for larger masses, would not allow the provision of a suitably robust final product while substantially retaining the porous structure and dissolution properties of the original powder. Equally, if the duration is too long, such as more than 120 seconds, the powder may fully agglomerate into a solid or glassy body.

### Ingredient Prewarming

Thirdly, the one or more soluble beverage ingredients in powder form may be prewarmed before loading into the mould-cavity. This ensures that a consistent internal structure is achieved throughout the resulting beverage mass. Furthermore, under compression this can ensure that the temperature is sufficient to cause the powder to bind into a robust and coherent mass.

Preferably the one or more soluble beverage ingredients in powder form are prewarmed before loading into the mould-cavity. Preferably the prewarming is to at least 30°C, more preferably from 30°C to 80°C, more preferably from 40°C to 60°C. Preferably the powdered soluble beverage ingredients are preferably prewarmed to a temperature at most 10°C, preferably at most 5°C below the glass transition temperature (Tg) of the one or more soluble beverage ingredients. The prewarming is preferably such that it is below the Tg of at least the major ingredient and preferably below the Tg of all of the ingredients (obviously excluding ingredients without a Tg, such as sugar).

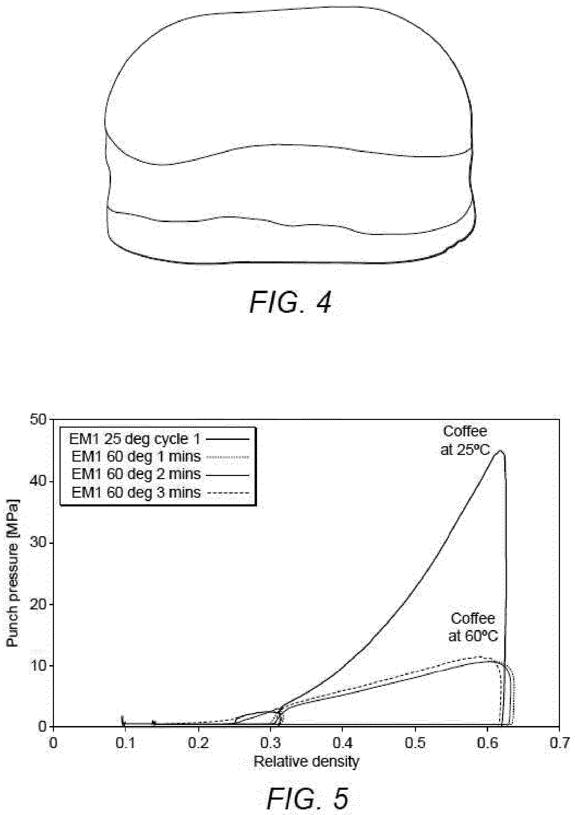

Figure 5 shows a graph of the pressure (MPa) required for the compression step compared to the relative density of the coffee being compressed. This is provided for coffee powder at 25°C and 60°C. The figure shows that the loading profile of a given powder at ambient temperature (25°C) is significantly different to that at T= 60°C. The peak stress reduces by almost 80% when the powder is heated compared to when it is compressed at room temperature. The Young's elastic modulus of the coffee (Table 1), is notably reduced from 5212 to 2769 MPa, with the corresponding increase temperature. Similarly a reduction is seen from 3989 to 2840 MPa with increase in temperature in the case of a creamer. The Young's elastic modulus is a measure of the stiffness of materials and is not only a function of the bulk structure but particle structure. Thus, apart from increasing the stickiness of the beverage particle surface with heat, the inventors of this disclosure use heat to reduce the axial stress which increases the likelihood of success in using low compression pressure to consolidate the soluble beverage particles in a mass.

**Table 1**

| **Material** | **Temperature [°C]** | **Young's Modulus E [MPa]** |
|---|---|---|
| Coffee | 25 | 5212 |
| Coffee | 60 | 2769 |
| Creamer | 25 | 3989 |
| Creamer | 60 | 2840 |

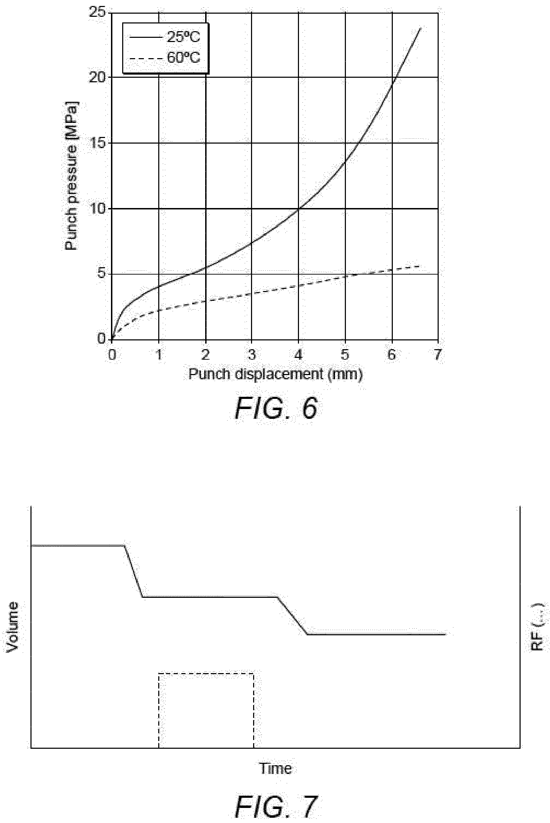

The method described herein therefore serves to reduce the peak stress such that low compression pressures may be used to form a beverage mass. The disclosure also reveals that heating the powder is important to avoid the steep rise in stress, as seen in Figure 6, required for the final densification stage. It can be seen from Figure 5 that a higher punch pressure is required at 25°C compared to 60°C to reach the same punch displacement. The inventors of this disclosure believe that the ratio of the peak punch pressures can be up to 5:1 for ambient and heated coffee powder respectively.

The inventors have found that, surprisingly, the use of a prewarmed powder significantly reduces the pressure required to compact the ingredients and form the beverage mass. Moreover, a more homogeneous and robust structure can be formed, without compromising the porosity of the starting material or the speed of dissolution.

The heat-treatment time is an essential feature. Each of the two other approaches may optionally be used in any combination to ensure an optimal structure of the final product.

In contrast to the method of US3293041, which relies on small volume pellet production, the present method allows the heating effect to permeate throughout the mass. These methods ensure a cohesive resilient product, which still dissolves quickly and readily. In contrast, if the method of US3293041 were to be scaled up to handle larger pellets, the temperature/pressure would need to be significantly increased to ensure that the pellet was sufficiently robust in the short processing time, which would lead to a poorly dissolvable product. Moreover, an overly long treatment time at high temperatures could result in a burned outer surface or off-flavours.

The soluble beverage mass has a weight of from 2 to 20g. Preferably the beverage mass is sized suitably to provide a beverage from a single mass. That is, preferably the mass is from 2 to 2.3g for a coffee beverage and from 12 to 17g for a chocolate beverage. For a creamed coffee beverage mass, the weight will typically be from 12 to 13g, including sugar, with a ratio of the creamer to coffee of 30 to 70. A hot chocolate beverage mass would typically include chocolate, sugar and creamer or milk powder, of which at least 50wt% will be sugar. These are typical values for the required solids necessary to provide full flavoured beverages of these types.

The mould and optionally the closure is preheated to a surface temperature greater than the Tg of the one or more soluble beverage ingredients (at least of the major ingredient). This allows the softening of the beverage ingredients so that a cohesive mass can be prepared. Preferably the mould and/or closure is heated to a temperature of from 60 to 120°C, more preferably 80 to 115°C, more preferably from 100 to 110°C. This range of temperatures has been found to be suitable for most beverage ingredients, especially soluble coffee, where is allows the provision of a cohesive mass without leading to a spoiling of the ingredients or any off-tastes. It is considered that the use of too much heating can cause scorching or off-flavours due to Maillards reactions which can occur.

Preferably the mass is cooled to room temperature or below and then removed from the mould. This helps to prevent damage of the product after the manufacture process. In general terms it has been found that the mass should at least be cooled below its glass transition temperature (Tg) before removal from the mould.

The inventors have found that the required amount of compression varies depending on the density of the starting material, especially when not relying on RF heating. Preferably when the one or more soluble ingredients have a bulk density of from 0.3 to 0.5g/cm³, the step of compressing reduces the volume of the soluble beverage ingredients by from 30 to 60% of the initial volume, preferably from 40 to 50%. That is, a 10ml volume is reduced to between 7 and 4ml. Preferably, when the one or more soluble ingredients have a bulk density of greater than 0.5g/cm³ to 1g/cm³ and the step of compressing reduces the volume of the soluble beverage ingredients by from 10 to 50% of the initial volume, preferably from 25 to 35%.

The inventors have investigated closely the impact of heat and pressure on the behaviour of beverage powder ingredients upon transformation from the loose powder to the beverage mass. For soluble beverage powder ingredients with bulk density between 0.2 and 0.5 g/cm³, a volume reduction between 30 and 60% is achievable without compromising the final product. This leads to a soluble beverage mass with a desired final density of at least 0.3g/cm³ for a (30% vol. reduction) and maximum density of 1.25 g/cm³ (60% vol. reduction). However, 60% volume reduction is not applicable to ingredients with density around 0.5 g/cm³. Preferably, the maximum volume reduction that can be applied to ingredients with densities around 0.5 g/cm³ is 50%, resulting in a soluble beverage mass with density of 1.0 g/cm³. As a result the finished product density range will be between 0.3-1.0 g/cm³, where the initial density of the soluble beverage powder ingredient is between 0.2-0.5 g/cm³.

For soluble beverage powder ingredients with bulk density between 0.5 and 1.0 g/cm³, a volume reduction of from 10% to up to 50% can be applied. The density of the finished soluble beverage mass in this case will be minimum 0.71 g/cm³ and maximum 2 g/cm³. However, ingredients with densities close to 1.0 g/cm³ cannot be compressed to 50% of their initial volume, so the maximum volume reduction that can be applied to ingredients with densities around 1.0 g/cm³ is 40%. Such a compression will result in a soluble beverage mass with density 1.67 g/cm³. As a result the finished product density range will be between 0.71-1.7 g/cm³, where the initial density of the soluble beverage powder ingredient is between 0.5-1.0 g/cm³.

Preferably, after loading the mould-cavity with the one or more soluble beverage ingredients, the method further comprises a step of sealing the mould cavity with a lid having a further contact surface. The lid preferably has the dual purpose of providing even heating around the mould contents while being able to provide the necessary in-mould compression. Preferably the further contact surface of the lid is formed of a dielectric material and/or the lid comprises a dielectric material and is provided with a lining or coating to form the contact surface. This allows the lid to be pre-warmed with RF heating, although other heating techniques are also suitable.

Preferably the one or more soluble beverage ingredients comprises soluble coffee, creamer, milk solids, sugar, flavourings, colourings, cocoa or chocolate, or a mixture of two or more thereof. Preferably the mass is formed from a single beverage ingredient or a blend of ingredients.

For example, the one or more soluble beverage ingredients may consist of soluble coffee and preferably have a total weight of from 0.5 to 5g, more preferably 1 to 3g, more preferably still about 1.8g. The soluble coffee may be a spray dried or a freeze-dried coffee. The soluble coffee may contain pores having trapped gas within the pores to provide a crema on the final beverage.

In an alternative embodiment, the soluble beverage mass may contain insoluble beverage ingredients or "inclusions", such as jelly, marshmallow or the like. These may advantageously provide a physical mouthfeel and pleasant texture to the final beverage.

Preferably the one or more soluble beverage ingredients are loaded into the mould cavity together with particles of finely ground coffee beans, preferably having a D90 of less than 300 microns. Combined soluble coffees and finely ground roast and ground coffee are well known in the beverage market, such as Millicano ^{™}. Alternatively, the soluble coffee may simply be premixed with a finely ground roast and ground coffee powder. The addition of roast and ground coffee in these ways has been found to cause both a surprising increase in the solubility of the beverage mass and an increase in the strength of the mass. Without wishing to be bound by theory, the insoluble particles appear to provide a structure to the masses and also a point of weakness for the infiltration of the aqueous medium into the mass. Preferably the soluble coffee contains particles of finely ground coffee beans, the ground beans preferably having a D90 of less than 300 microns and a D50 of from 5 to 60 microns.

Preferably the one or more soluble beverage ingredients comprise two or more ingredients and the soluble beverage ingredients form separate layers or separate portions within the mass. This provides a pleasing appearance to the final product and can also allow for temporal profiling of the dissolution of the different ingredients (i.e. an outer milk foam may be formed first, followed by a central coffee layer to ensure that the foam on the beverage is white). Preferably the ingredients are not mixed together but instead form visibly discernible layers to provide an impression of the beverage ingredients to the consumer.

Then the mass is formed from separate layers, it is possible to fill and compress each layer into the mould sequentially. In this instance it is preferred that the ingredient with the highest Tg is filled first and the temperature of the mould allowed to decline to minimise the time that the earlier layers are close to their Tg. This stepwise heating approach ensures that the layers are individually and mutually consistent and cohesive.

In another embodiment, the ingredients may first be agglomerated together before the forming of the soluble beverage mass. Alternatively the ingredients may be combined and then spray or freeze-dried.

Preferably the soluble beverage mass comprises two or more of soluble coffee, creamer, chocolate and wherein each is included in at least one separate discrete layer or portion of the mass.

The beverage ingredients are provided in powder form and preferably comprise particles having a D99 of 800 microns or less and/or a D50 of 300 microns or less. Techniques for measuring these parameters are well known in the art. It is preferred to use a Malvern Dry laser diffraction technique.

In one embodiment the one or more soluble beverage ingredients comprise soluble coffee and, in addition, from 0.01 to 0.1g of coffee oil is added to the mould with the one or more soluble beverage ingredients. Coffee oils, such as Coloma oil, are typically added to instant coffees in order to provide a strong coffee aroma. By including the oil in the mould with the ingredients the aroma may be preserved with the masses and released on preparation of a beverage. Preferably the one or more soluble beverage ingredients comprise a foaming soluble beverage ingredient containing trapped pressurised gas. Suitable methods for producing such an ingredient are disclosed in EP 1627568, Preferred embodiments include foaming soluble coffee and, foaming soluble creamers and foaming soluble milk powders. This allows for the formation of a crema on the surface of the final beverage. Alternatively, if sufficient gas can be trapped then the beverage itself may be partially foamed.

According to one embodiment, the soluble beverage ingredients in the mould-cavity are not subjected to RF heating.

Preferably the one or more soluble beverage ingredients do not comprise a binder. That is, there is no need to include a glue or other ingredient that is not required in the final beverage in order to produce the soluble masses. This is because the method of the present invention is suitable for the formation of masses without a binder.

Preferably the one or more soluble beverage ingredients have a moisture content of from 0.1 to 6wt%, preferably from 2 to 5wt%. This level of moisture content allows the masses produced therefrom to fuse easily in the mould-cavity and is also sufficiently low to allow a long shelf life of the final product. The product should be shelf stable at 20°C for a period of at least 6 months, preferably at least 12 months.

The soluble beverage mass is preferably made and then sealed into substantially air- and moisture-impermeable packaging for sale. In this way it is possible to prevent any degradation of the product before use.

Preferably a closure for the mould cavity provides the soluble beverage mass with a substantially flat surface, or a surface having a peripheral portion on which the mass can stably rest and a central indented portion defining a cavity within the mass. It is desirable that the soluble beverage mass is able to stably rest upon a surface. This allows, for example, the transport of the soluble beverage mass on a conveyor belt without the risk of it rolling away. Thus, preferably the soluble beverage mass is provided with a substantially flat surface formed by the lid.

Alternatively, the soluble beverage mass is provided with a surface formed by the lid having a peripheral portion on which the mass can stably rest and a central indented portion defining a cavity within the mass. For example, the surface formed by the lid may provide the mass with a rim and a concave cavity, whereby the mass may rest on the rim when placed on a flat surface. It will be appreciated, of course, that a resting surface may be provided by the mould-cavity and not by the lid per se. However, it has been found that the use of shaping features within the mould-cavity may cause difficulties when retrieving the mass from the mould.

Preferably the soluble beverage mass is transported after production on said surface formed by the lid. In one embodiment the lid includes a stamp or cavity, whereby a marking can be formed on the mass during the compression. This is useful for providing branding or an identification of flavour.

According to a second aspect, there is provided a soluble beverage mass having a weight of from 2 to 20g obtainable by the method disclosed herein, wherein the soluble beverage mass has a porosity of from 10 to 50% and a homogeneity such that the porosity variance across a cross-section if the mass does not vary by more than +/-20%.

The soluble beverage mass preferably has a density of from 0.25g/cm³ to 1.7g/cm³, and a surface hardness breaking force of at least 8N. The soluble beverage mass preferably has a density of from 0.5g/cm³ to 1.3g/cm³, and a surface hardness breaking force of preferably from 8N to 100N, preferably 20 to 100N.

Preferably the mass dissolves completely within 10 to 120 seconds, more preferably 25 to 90 seconds of immersion in 250ml of 80-95°C water with gentle stirring.

The mass has a porosity of from 10-50%. This can be measured by techniques well known in the art, such as helium pycnometry or x-ray tomography. The mass has a homogeneity such that the porosity variance across a cross-section of the mass does not vary by more than +/-20%, more preferably by less than +/-10%. When using an RF heating step the product has a more homogeneous porosity of less than +/-5%. In contrast, without RF heating the porosity is +/-5% or more. Similarly, the breaking force achievable with RF heating may be less than 25N, whereas without it will typically be from 25-100N in view of the compression used.

Preferably the mass further comprises from 7.5 to 15wt% of finely ground roasted coffee.

The soluble beverage mass may be provided with any suitable shape and surface texture. Preferably the surface is substantially smooth. In various examples, the soluble beverage mass is shaped as a hemisphere, an elongate hemisphere and/or a prolate hemisphere. These rounded shapes are reminiscent of the shapes of fine chocolates and this imports an impression of quality in the finished product. Alternatively the mass may be suitable for forming a number of beverages, resembling a chocolate bar, whereby pieces may be broken off for use to form a beverage.

According to a further aspect there is provided a method of preparing a beverage, the method comprising contacting the soluble beverage mass described herein with an aqueous medium. While the aqueous medium will generally be water, it may alternatively comprise or consist of milk. The aqueous medium may be at any suitable beverage temperature but preferably has a temperature of from 75 to 95°C.

The invention will now be described in relation to the following non-limiting figures, in which:
Figure 1 is a schematic of the equipment used in the process described herein.
Figure 2 is a cross-sectional diagram of a beverage mass produced according to the method disclosed herein.
Figure 3 shows a drawing of a suitable design for an apparatus for mass-producing the beverage mass as described herein.
Figure 4 is an enlarged photograph of a beverage mass having two soluble coffee layers sandwiching a layer of milk powder.
Figure 5 shows a graph of a coffee compression profile at 25 and 60 °C.
Figure 6 shows punch pressures for a coffee powders at 25 and 60 °C.
Figure 7 is a representative plot of the volume of the beverage ingredient in the mould over time, showing the application of RF heating.

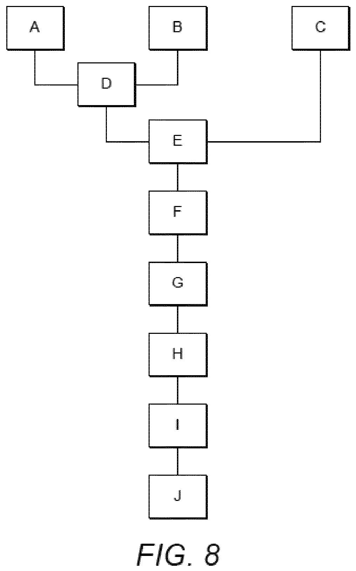

Figure 8 is a flowchart of an embodiment of the method described herein. In this flow chart, the method steps are as follows:
   In step A a spray dried coffee powder is provided. In step B a finely ground roasted coffee powder is provided. In step C a milk powder is provided.
   In step D the spray dried coffee powder and the finely ground roasted coffee powder are mixed together in a high shear mixer.
   In step E, a preheated mould cavity (such as 90 to 120°C) is filled sequentially with a layer of coffee mixture and a layer of the milk powder. These powders are optionally prewarmed.
   In step F, the ingredients are optionally compressed, such as to reduce the powder to 60% of the original volume with a compression tool which slides within the mould cavity.
   In step G the ingredients are optionally heated with RF heat in an RF oven to reach the Tg of the ingredients (approximately 60 to 80°C). The RF heating may be 400W at 27.12MHz for 10 seconds to 1 minute.
   In step H the ingredients are compressed to 60% of the original volume and left in the mould for, preferably, one minute.
   In step I the masses formed are demoulded and in step J the masses are packaged for distribution and sale.

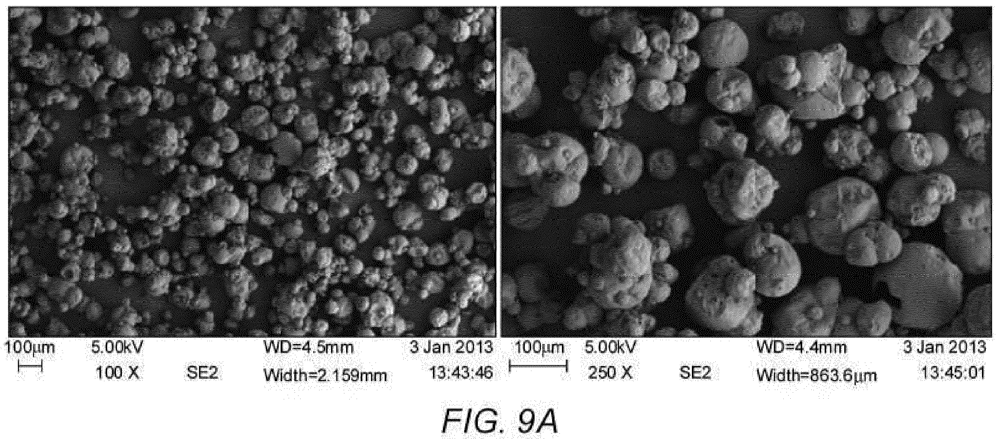

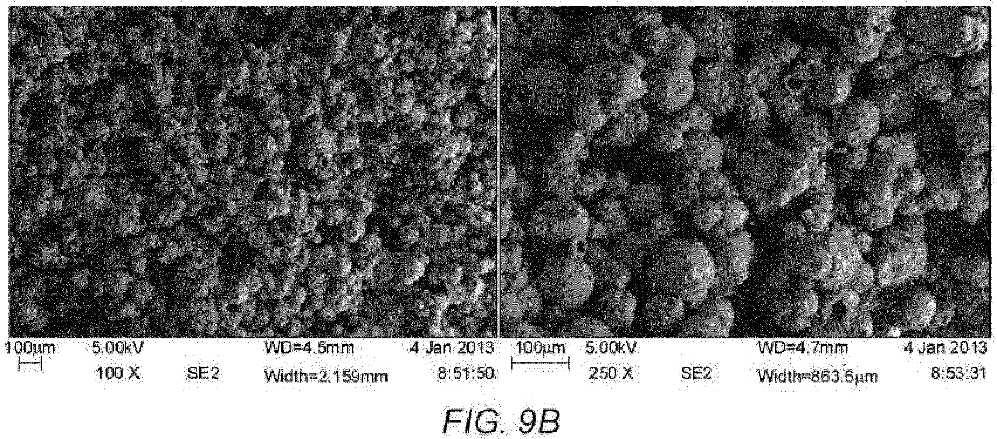

Figure 9A shows a scanning electron microscope image of a coffee powder (spray dried coffee) suitable for use to form a soluble beverage mass. Figure 9B shows a scanning electron microscope image of a soluble beverage mass formed from the coffee powder in Figure 9A. As clearly shown, the method does not disrupt the structure of the powder and this supports the finding that the solubility properties of the mass resemble those of the ingredient powder.

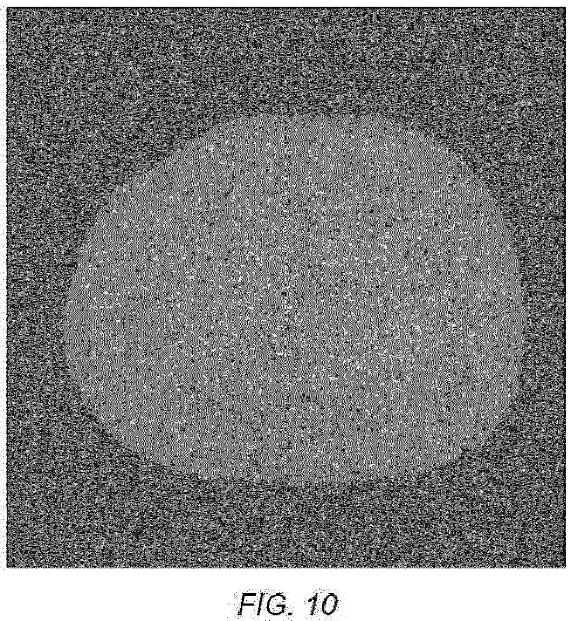

Figure 10 shows an x-ray tomography picture of a soluble beverage mass formed according to the method disclosed herein from a non-gas injected feed powder.

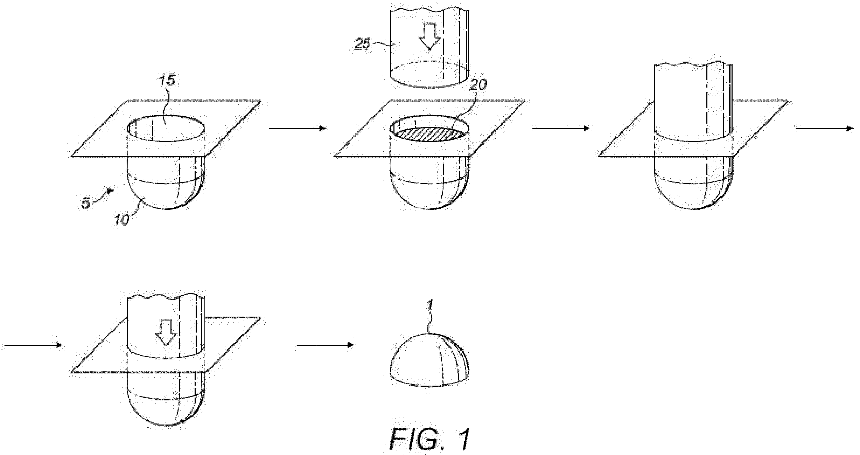

As shown in Figure 1, a soluble beverage mass 1 may be produced as follows. A mould 5 is provided with a PVDF lining 10 which lines the outside of a mould cavity 15.

The lining 10 is pre-heated with an RF source (not shown) to a temperature of about 100°C. Alternatively, the pre-heating can be achieved with a conventional heat source. Soluble coffee 20 is filled into the mould cavity 15 and compacted with a plunger 25. The plunger 25 is formed from PVDF, preheated and used to form the lid of the enclosed mould 5.

The mass 1 is held in the compacted for 60 seconds. The mass 1 can then be easily turned out of the flexible lining 10.

Alternatively, a soluble beverage mass 1 may be produced as follows. A mould 5 is provided with a PVDF lining 10 which lines the outside of a mould cavity 15.

The lining 10 is pre-heated with an RF source (not shown) to a temperature of about 100°C. Alternatively, the pre-heating can be achieved with a conventional heat source. Soluble coffee 20 is filled into the mould cavity 15 and compacted with a plunger 25. The plunger 25 is formed from PVDF and used to form the lid of the enclosed mould 5.

The contents of the mould 5 is then heated by the RF source. Once the coffee 20 is evenly heated above its *tg,* the plunger 25 is used to further compress the heated coffee 20. The coffee is allowed to cool to form the soluble beverage mass 1. The mass 1 can be easily turned out of the flexible lining 10.

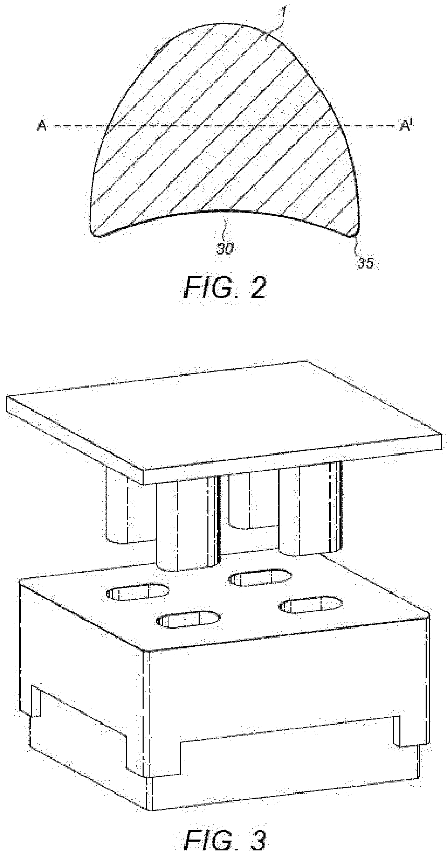

As shown in Figure 3, the mass 1 may be provided with a base 30 which is either flat or indented so as to provide a stable base formed by the peripheral rim 35.

The invention will now be described in relation to the following non-limiting examples.

### Examples with RF heating of the beverage ingredients

### Example 1 (comparative)

100g of spray dried foaming coffee powder was placed in a cylindrical polypropylene mould with an internal diameter of 40mm and an internal height of 80mm. The mould was then placed inside RF oven. RF power was then applied at 200 watts for 225 seconds. The temperature of the coffee rose to 75°C from a starting temperature of 20°C. The temperature was measured using a fiber optic temperature probe.

The mould was subsequently removed from the RF oven and a pneumatic press tool added compression from above to compress the heated coffee bed to 70% of its original volume. The mould was then allowed to cool and the formed slab of spray fried coffee powder was removed.

This slab had the characteristics of an even agglomeration profile through the depth of the slabs with no spots of over or under heating. The surface of the slab was erosive and powdery.

### Example 2 (Comparative)

1.5 Kg of spray dried coffee powder was placed in a cylindrical polypropylene mould with an internal diameter of 300mm and an internal height of 100mm. The mould was then placed inside a RF system set at a frequency of 13.56 MHz. RF power was then applied at 3 kW for 205 seconds. The temperature of coffee rose from 20°C to a final 80°C after the 205 second period.

The mould was then subsequently removed from the RF oven and a pneumatic press tool added compression from above to compress the heated coffee bed to 70% of its original volume. The mould was then allowed to cool and the formed slab of spray fried coffee powder was removed. This slab had the characteristics of an even agglomeration profile through the depth of the slabs with no spots of over or under heating. The surface of the slab was erosive and powdery.

### Example 3

3.1 g of soluble coffee powder with 15% Roast and ground coffee (R&G) (D100 <60µm) containing a density of 40g/100ml, colour of 11 La, and a moisture content (MC) of 3.5% was filled into a pre-heated PVDF mould and slightly tapped to encourage the particles to be in contact with each other. The mould was pre heated to approximately 100°C-115C°. Heat conducted from the mould onto the coffee powder created a "shell" on the surface of the shape. The temperature of the coffee in contact with the mould reached approximately 90°C.

The mould containing coffee was then placed in between the two electrodes of the RF oven and a power of 450 W was applied for 20 seconds. A fiber optic temperature probe was placed in the centre of the coffee particulate shape in the mould. A gradual temperature rise from 45°C to 65°C was observed during the 30 seconds, which raised the temperature of the particulates within the "shell" to above its Tg. A slight compression of ~2N was applied on the product whilst still in its soft glassy state, to further assist the particles to fuse together. Following the two compression steps there was a 28% reduction in nugget volume. The fused shape was then left in the mould to cool for 30 -50 seconds, and removed. The fused shape dissolved in hot water / milk >85°C within 30 seconds.

### Example 4

3.1 g of soluble coffee powder with a density of 23g/100ml, and a MC of 3% was filled into a pre heated PVDF mould and slightly tapped to encourage the particles to be in contact with each other. The mould was pre heated to approximately 110°C. Heat conducted from the mould onto the coffee powder created the "shell". The mould containing coffee was then placed in between the two electrodes of the RF oven and a power of 450 W was applied for 18 seconds. A gradual temperature rise from 45°C to 70°C was observed during the 18 - 20 seconds. No compression was applied. The temperature at the middle of the fused shape was around 70°C. The fused shape was then left in the mould to cool for 30 seconds, and removed. The fused shape dissolved in hot water/ milk at >85°C within 30 seconds, but was more easily damaged than some other examples when transported.

### Example 5 (reference)

1.9 g of soluble coffee powder with up to 15% finely ground Roast and ground coffee (R&G) wet mixed, was filled into a preheated mould cavity and slightly tapped and compressed to encourage the particles to be in contact with each other. The mould was pre-heated to approximately 90°C-120°C. The mould containing coffee was then placed in between the two electrodes of the RF oven (27.12Mhz) and a power of 400 W was applied for 20 seconds. A pressure of 0.1Mpa was applied on the flat surface of the mould for 60 seconds. Whilst the product was still in its soft rubbery state, this step moulds the particles to the required 3D shape. Following the compression step a 35-55% reduction in nugget volume can be achieved. The fused shape dissolved in hot water / milk >85°C within 30 seconds.

### Example 6 (reference)

1.9 g of pure soluble coffee powder was filled into a pre-heated mould cavity slightly tapped and compressed to encourage the particles to be in contact with each other. The mould was pre heated to approximately 90°C-120C°. The mould and coffee was then placed in between the two electrodes of the RF oven and a power of 400 W was applied for 30 seconds. A pressure of 0.1Mpa was applied on the flat surface of the mould for 60 seconds. Whilst the product was still in its soft rubbery state, this step moulds the particles to the required 3D shape. Following the compression step a 35-55% reduction in nugget volume can be achieved. The fused shape dissolved in hot water / milk >85°C within 30 seconds.

### Example 7

3.1g of a 2 in 1 coffee mix (spray dried coffee powder with non-dairy creamer) was filled into a preheated mould at 80-90°C. The powders were tapped and slightly compressed. 500W of RF power was applied to heat the product for 15 seconds in the RF oven. A slight compression was applied (0.2Mpa), and the 3D shape was de-moulded after cooling for 30 seconds. The said nuggets dissolved in hot water/milk > 85°C within 90 seconds.

### Example 8 (comparative)

3.1g of a 3 in 1 coffee mix (spray dried coffee powder, sugar and non-dairy creamer) was filled into a preheated mould at 60-78°C, a slight compression was applied and the mould and mix was placed in between the electrodes. A power of 300 W of RF was applied and the mould and product was heated for 56 minutes. The product was cooled in the mould for 30 seconds and then removed. The nugget dissolved in hot water/milk at > 85°C within 90 seconds.

### Example 9

3.1 g of soluble coffee powder with 15% finely ground R&G (D100 <60µm), containing a density of 40g/100ml, colour of 11 La, and a moisture content (MC) of 3.5%, was wet mixed, was deposited into a pre- heated mould cavity. The mould was filled to 1/3 of the mould volume. Onto this layer of coffee powder, a layer of spray dried milk powder known as 'Regilait' was deposited to fill 2/3 the volume of the mould. Then onto this milk powder layer, another layer of the first coffee powder was deposited into and slightly tapped to encourage the particles to be in contact with each other. Heat conducted from the mould onto the coffee and milk powder created a "shell" on the surface of the shape. The mould containing coffee and milk powder was then placed in between the two electrodes of the RF oven and a power of 450 W was applied for 20 seconds. A slight compression of 0.1Mpa was applied on the product whist still in its soft rubbery state, to create a 3D shape. The fused shape dissolved in hot water / milk >85°C within 30 seconds.

### Example 10

Porosity was measured using x-ray tomography to determine the structure of the coffee mass produced in Example 4. Specifically, the porosity was measured at the centre and close to the outer edge of the mass (based on a cross-section). The porosity measurement was 58.5% at the centre and 58.1% close to the outer edge. This shows that the mass has a light homogeneous structure which dissolves readily because the porosity of inner and outer are more less the same and were both high.

The experiment was repeated with a gas-injected starting material. The porosity measurement was 74.1% at the centre and 73.4% close to the outer edge. This shows that the mass has a light homogeneous structure which dissolves readily because the porosity of inner and outer are more less the same and were both higher.

### Example 11

In this example, the benefits were investigated of using a coffee as a starting material containing both trapped gas and finely ground roasted coffee.

Using a spray dried powder (with spherical structure) produced with gas injection demonstrated better solubility when compared to nuggets made with non-gas injected spray dried powders. The gas injected powders contributed to more void volume in the nugget (both internal and interstitial), when compared to the non-gas injected equivalent which is primarily dominated by interstitial voids

Furthermore, the addition of microground coffee as described herein was found to provide extra structural integrity in the spherical spray dried particles, when compared to particles containing no micro grind.

The following prototypes were examined:

| **Spray dried Coffee +** | **Average Dissolution time (in seconds)** |
|---|---|
| 10% microgrind* no gas injection (P2) | 33 ± 0.7 seconds |
| 10% microgrind* with gas injection (P1) | 28 ± 0.4 seconds |

| | |
|---|---|
| *finely ground roasted coffee with a particle size of less than 60 microns. | |

When the powders are compressed to form nuggets, P1 retains more of its spherical structure due to its increased structural integrity and therefore will have more interstitial void volume between the particles aiding water permeation. Nuggets made using P2 demonstrated a more collapsed spherical structure and therefore had reduced interstitial void volume and therefore reduced water permeation and increased dissolution times. P1 and P2 are shown in figures 3A and 3B respectively.

Accordingly, it is especially preferred that at least one of the ingredients in the soluble beverage mass is a soluble coffee containing both trapped pressurised gas in pores thereof, and finely ground roasted coffee.

As demonstrated in the examples, there are a number of advantages associated with the techniques used herein. In particular:
When particulates are fused using dielectric heating technology, this enables lower heating times required to achieve Tg of the powders. Compared to conventional heating, dielectric heating has its advantages as it is possible to heat the particles in a volumetric manner rather than by conduction, convection and radiation methods. Conventional methods penetrate heat from the outsides of the mould then to the surface of the coffee powder shapes and into the centre of the shapes, thus causing charring of the surface of the shape to enable the centre of the shape to reach its required glass transition state. By contrast volumetric heating heats the water molecules within the shape, hence heating the shape uniformly. Therefore heat damage to the product can be minimised, and volatile flavours within the product can be retained.

Filling the powder into a RF penetrable solid mould which is heatable in dielectric fields, such as PVDF, avoids the need for requiring blister packs to retain the product in. Once the product is moulded, it can be de-moulded and will hold its shape independently.

Shaping of the powders using dielectric heating within a heated mould creates a "shell" or a protective layer on the surface, thus improving the hardness and friability of the produced shape, when removed from the mould. This protective layer also provides protection to the hygroscopic particulates within, hence reducing chances of the particulates within the protective layer to "cake".

Due to the protective layer, the fused shape demonstrated good solubility (3.1 g of formed particulates dissolved within 60 seconds) when in contact with water or milk at 70-100°C, as the particulates within the shell still retained their spherical structure, hence allowing for water to permeate through it. As the particulates within the shell retained its porosity the wettability of the shape improved.

When dairy powders are used, in particular, the possibility of Maillard reactions occuring during the process can be limited due to the low temperature and time exposure.

### Examples without RF heating of the beverage ingredients

Mould - The mould material can be designed of any material and shape. Materials include but are not limited to polymers and metals which are characterised by a high heat capacities, high hardness to keep their shape when exposed to the compression forces and have to endure the temperatures used without significantly expanding and changing their shape. The mass capacity of the mould cavity can be between 0.5-20g of any instant beverage powder for single serving.

Preheating the mould - Any heating method that raises the temperature of either the whole of the mould or only the surface area in contact with product can be used for preheating the mould. This includes but is not limited to conventional oven, dielectric heating, **IR** and conduction heating via heated plungers.

Feed material - Feed materials can include soluble as well as insoluble ingredients. The feed material can be a blend of beverage ingredients or different ingredients spray dried as one powder. The amount used can be for single or multiple case masses between 0.5-20g. The powders are characterised by a particle size of X99 of 200-1000um, a density of 200-1000g/L, moisture up to 7% and a GTVV of 10-65%.

Preheating powder - The powder should be preheated with no significant moisture loss. This includes but is not limited to dielectric heating or conventional heating in closed systems or a conditioned fluidized bed dryer.

Dissolution test - The soluble beverage mass was placed into a cup add 200 mL of water heated at 85°C were added. The mass was continuously stirred with a teaspoon until complete dissolution was observed. The time from the moment that water came into contact with the mass till the complete dissolution was measured using a stopwatch.

Hardness test - For hardness testing a Hounsfield equipment H25KS-0231 with a load range of 250 N is used. The soluble beverage mass is placed under a plate. The plate is lowered at a speed of 2 mm/min.

Micro computed X-ray tomography and 3D image analysis - X-ray tomography scans were performed with a 1172 Skyscan MCT (Bruker) with a X-ray beam of 50 kV and 200 µA. The coffee nuggets were placed on a brass sample stage (SP-1104, base with 65 mm diameter), and the height is adjusted for each nugget to ensure an optimal field of view. For an image pixel size of 6.5 µm, the camera was set up to 4000x2096 pixels and placed in the near position. The exposure time used was 1767 ms. The scan was performed over 180°, the rotational step was 0.3°, the frame averaging was 4, and random movement was 5.

### Example 12: Coffee

A PVDF mould was preheated by RF at 400 W until its base reached 110°C and its lid 120°C. The application was RF radiation was discontinued at this point. 2 g of SD coffee (100% Robusta) with 7.5% MG was filled into each of the six mould cavities. The coffee was compressed to 67% of its original volume for 60 seconds, followed by a demoulding step. Total time for the powder in the mould was approximately 70 seconds.

The dissolution with water at 85°C took around 54 seconds and the nugget was characterised by a fracture force (hardness) of around 50 N.

### Example 13: Coffee (comparative)

A PVDF mould was preheated by RF at 400 W until its base reached 100 °C and its lid 120°C. The SD coffee (100% Arabica) with 7.5% MG was heated in a covered silicone mould by RF at 200 W for 200 s to approximately 55°C. The application was RF radiation was discontinued at this point. 2 g of the pre-heated coffee were filled into each of the six mould cavities. The coffee was compressed to 50% of its original volume for 120 seconds, followed by a demoulding step. Total time for the powder in the mould was approximately 130 seconds.

The dissolution with water of 85°C took around 27 seconds and the nugget was characterised by a fracture force (hardness) of around 81 N.

### Example 14: Chocolate

A PVDF mould was preheated by RF at 400 W until reached 110°C. The application was RF radiation was discontinued at this point. 15g of Hot Chocolate powder were filled into the preheated single cavity mould. A stress of 420 kPa was applied to the chocolate powder for 60 seconds, followed by a demoulding step. Total time for the powder in the mould was approximately 70 seconds.

The dissolution with water of 85°C took around 40 seconds and the nugget was characterised by a fracture force (hardness) of around 525 N.

### Example 15: Chocolate

A PVDF mould was preheated by RF at 400 W until reached 60°C. Hot chocolate powder was thermally treated in a covered PP beaker by RF at 200 W to approximately 60°C. The application was RF radiation was discontinued at this point. 15 g of the pre-treated chocolate powder were filled into the preheated single cavity mould. A stress of 420 kPa was applied to the chocolate powder for 60 seconds, followed by a demoulding step. Total time for the powder in the mould was approximately 70 seconds.

The dissolution with water of 85°C took around 40 seconds and the nugget was characterised by a fracture force (hardness) of around 290 N.

### Comparative testing compared to the tablet of WO2013001052.

| | **RF heating** | **Without RF heating** | WO2013001052 |
|---|---|---|---|
| Density of soluble powder ingredient (g/cm³) | 0.2-0.5 /0.5-1.0 | 0.2-0.5 /0.5-1.0 | n/a |
| Volume reduction (%) | 20%~80% / 10%~50% | 30%~60%/10%~50 % | n/a |
| Density of soluble beverage masses (g/cm³) | 0.25-2.5 /0.71-1.67 | 0.29-1.0/0.71-1.67 | 0.4-0.8 |
| Porosity of finished product (%) | 30-60 (no skin presence) | 5-60 (no skin presence) | Core: ~56 |
| | | | Outer: ~0 (assumption due to moistening step) |
| Protective skin | No | No | Yes |
| Structure of mass | Homogeneous | Variable | Always more than two layers (outer layer no/less porous than core) |
| Homogeneity (variation of porosity throughout a mass bed) | +- 2 | +- 20 | +-25 |
| Dissolution time (s) | <100 | <100 | 10-80 |
| Breaking force (N) | >10 | >10 | <10 |

The homogeneity is a measure of the variation in the porosity of the mass along a cross-sectional line of measurements obtained through a beverage mass. The porosity can be determined using any conventional method, such as assessment of microscopy images obtained across the cross-section.

Further tests were performed as summarised in the following table. The sample numbers do not refer to the earlier examples above.

| Process | units | Quality | satisfying ranges |
|---|---|---|---|
| Dissolution time | seconds | Low is good | Below 100 |
| Breaking force | N | High is good | Above 10 |
| Overall quality | | OK/No | OK when both dissolution time and breaking force are in preferred |
| Porosity | | | 20~60 |

| Process | units | Quality | Invention process | | | |
|---|---|---|---|---|---|---|
| Feed materials | | | coffee with insoluble addition | | | |
| Process | | | RF + low compression | | | |
| Ranges (compression- Spacer bar) | | | 5mm | 4mm | 2mm | 0 |
| sample number | | | **1** | **2** | **3** | **4** |
| Dissolution time | seconds | Low is good | 21 | 50 | 60 | 74 |
| Breaking force | N | High is good | 27.1 | 29.1 | 60.8 | 88.6 |
| Overall quality | | OK/No | OK | OK | OK | OK |
| Porosity | | High is good | 48.1 | 44.2~47.9 | 37.5 | 21.9~38.7 |

| Process | units | | Invention process | | | |
|---|---|---|---|---|---|---|
| Feed materials | | | coffee without insoluble addition | | | |
| Process | | | RF + low compression | | | |
| Ranges (compression- Spacer bar) | | | 5mm | 4mm | 2mm | 0 |
| sample number | | | **5** | **6** | **7** | **8** |
| Dissolution time | seconds | Low is good | 52 | 76 | 90~108 | 185 |
| Breaking force | N | High is good | 8.6 | 11.2 | 15 | 41.8 |
| Overall quality | | OK/No | No | OK | OK | NO |
| Porosity | | High is good | 54.4 | 47.8 | 49.8 | 50 |

| Process | units | | Prior art process (High compaction) | | | |
|---|---|---|---|---|---|---|
| Feed materials | | | coffee with insoluble addition | | | |
| Process | | | High compression | | | |
| Ranges (compression) | KN | | 1.5 | 2 | 3 | 4 |
| sample number | | | **9** | **10** | **11** | **12** |
| Dissolution time | seconds | Low is good | 115 | 180 | 230 | 330 |
| Breaking force | N | High is good | 183 | 367 | 450 | 818 |
| Overall quality | | OK/No | No | No | No | No |
| Porosity | | High is good | 23.6 | 22.2 | 19.3 | 14.2 |

| | units | | Prior art process (High compaction) | | | |
|---|---|---|---|---|---|---|
| Feed materials | | | coffee without insoluble addition | | | |
| Process | | | High compression | | | |
| Ranges (compression) | KN | | 1.5 | 2 | 3 | 4 |
| sample number | | | **13** | **14** | **15** | **16** |
| Dissolution time | seconds | Low is good | 243 | 338 | 373 | 440 |
| Breaking force | N | High is good | 271 | 336 | 446 | 1159 |
| Overall quality | | OK/No | No | No | No | No |
| Porosity | | High is good | 20.4 | 18.9 | - | 4.4 |

| | units | | Prior art process (a) / WO2013001052 |
|---|---|---|---|
| Feed materials | | | coffee without insoluble addition |
| Process | | | Moistening + High compression |
| Ranges (compression) | KN | | 1.5 |
| sample number | | | **17** |
| Dissolution time | seconds | Low is good | 40 |
| Breaking force | N | High is good | 7 |
| Overall quality | | OK/No | No |
| Porosity | | High is good | 30.5 |

| Process | units | Quality | satisfying ranges |
|---|---|---|---|
| Dissolution time | seconds | Low is good | Below 100 |
| Breaking force | N | High is good | Above 10 |
| Overall quality | | OK/No | OK when both dissolution time and breaking force are in preferred |
| Porosity | | | 20~60 |

| Process | units | Quality | Invention process | | | |
|---|---|---|---|---|---|---|
| Feed materials | | | coffee with Insoluble addition | | | |
| Process | | | RF + low compression | | | |
| Ranges (compression- Spacer bar) | | | 5mm | 4mm | 2mm | 0 |
| sample number | | | **1** | **2** | **3** | **4** |
| Dissolution time | seconds | Low is good | 21 | 50 | 60 | 74 |
| Breaking force | N | High is good | 27.1 | 29.1 | 60.8 | 88.6 |
| Overall quality | | OK/No | OK | OK | OK | OK |
| Porosity | | High is good | 48.1 | 44.2~47.9 | 37.5 | 21.9~38.7 |

| Process | units | | Invention process | | | |
|---|---|---|---|---|---|---|
| Feed materials | | | coffee without insoluble addition | | | |
| Process | | | RF + low compression | | | |
| Ranges (compression- Spacer bar) | | | 5mm | 4mm | 2mm | 0 |
| sample number | | | **5** | **6** | **7** | **8** |
| Dissolution time | seconds | Low is good | 52 | 76 | 90~108 | 185 |
| Breaking force | N | High is good | 8.6 | 11.2 | 15 | 41.8 |
| Overall quality | | OK/No | No | OK | OK | NO |
| Porosity | | High is good | 54.4 | 47.8 | 49.8 | 50 |

| Process | units | | Prior art process (High compaction) | | | |
|---|---|---|---|---|---|---|
| Feed materials | | | coffee with insoluble addition | | | |
| Process | | | High compression | | | |
| Ranges (compression) | KN | | 1.5 | 2 | 3 | 4 |
| sample number | | | **9** | **10** | **11** | **12** |
| Dissolution time | seconds | Low is good | 115 | 180 | 230 | 330 |
| Breaking force | N | High is good | 183 | 367 | 450 | 818 |
| Overall quality | | OK/No | No | No | No | No |
| Porosity | | High is good | 23.6 | 22.2 | 19.3 | 14.2 |

| | units | | Prior art process (High compaction) | | | |
|---|---|---|---|---|---|---|
| Feed materials | | | coffee without insoluble addition | | | |
| Process | | | High compression | | | |
| Ranges (compression) | KN | | 1.5 | 2 | 3 | 4 |
| sample number | | | **13** | **14** | **15** | **16** |
| Dissolution time | seconds | Low is good | 243 | 338 | 373 | 440 |
| Breaking force | N | High is good | 271 | 336 | 446 | 1159 |
| Overall quality | | OK/No | No | No | No | No |
| Porosity | | High is good | 20.4 | 18.9 | - | 4.4 |

| | units | | Prior art process (a) / WO2013001052 |
|---|---|---|---|
| Feed materials | | | coffee without insoluble addition |
| Process | | | Moistening + High compression |
| Ranges (compression) | KN | | 1.5 |
| sample number | | | **17** |
| Dissolution time | seconds | Low is good | 40 |
| Breaking force | N | High is good | 7 |
| Overall quality | | OK/No | No |
| Porosity | | High is good | 30.5 |

## Claims

1. A method for producing a soluble beverage mass having a weight of from 2 to 20 g, the method comprising:
providing one or more soluble beverage ingredients in powder form,
providing a pre-heated mould having a mould-cavity preheated to a surface temperature greater than the Tg of the one or more soluble beverage ingredients,
loading the mould-cavity with the one or more of the soluble beverage ingredients, and
compressing the one or more soluble beverage ingredients in the mould-cavity to form a soluble beverage mass,
wherein the one or more soluble beverage ingredients are retained within the mould-cavity for from 15 to 120 seconds.

2. The method according to claim 1, wherein:
(i) the method further comprises applying RF radiation to heat the soluble beverage ingredients in the mould-cavity; and/or
(ii) the one or more soluble beverage ingredients in powder form are prewarmed before loading into the mould-cavity.

3. The method according to claim 1 or claim 2, wherein the mould and/or closure is heated to a temperature of from 60 to 120°C.

4. The method according to any of the preceding claims, wherein the one or more soluble ingredients have a bulk density of from 0.2 to 0.5g/cm³ and the step of compressing reduces the volume of the soluble beverage ingredients by from 30 to 60% of the initial volume; or
wherein the one or more soluble ingredients have a bulk density of greater than 0.5g/cm³ to 1g/cm³ and the step of compressing reduces the volume of the soluble beverage ingredients by from 10 to 50% of the initial volume.

5. The method according to any of the preceding claims, wherein the one or more soluble beverage ingredients are retained within the mould-cavity for from 30 to 100 seconds.

6. The method according to any of the preceding claims, wherein the one or more soluble beverage ingredients comprise:
(i) soluble coffee, creamer, milk solids, sugar, flavourings, colourings, foaming agent, cocoa or chocolate, or a mixture of two or more thereof; and/or
(ii) a foaming soluble beverage ingredient containing trapped pressurised gas and/or
(iii) two or more ingredients and wherein the soluble beverage ingredients form separate layers or separate portions within the mass and/or
(iv) do not comprise a binder.

7. The method according to any of the preceding claims, wherein the mould-cavity has a contact surface for contacting the one or more soluble beverage ingredients and wherein the contact surface of the mould-cavity is formed of a dielectric material and/or wherein the mould comprises a dielectric material and is provided with a lining or coating to form the contact surface, preferably wherein the dielectric material comprises PVDF or a polymer containing particles of carbon black.

8. The method according to any of the preceding claims, wherein the step of compressing the one or more soluble beverage ingredients in the mould-cavity is performed after or together with applying RF radiation to heat the soluble beverage ingredients in the mould-cavity.

9. The method according to any of the preceding claims, wherein, in the step of applying RF radiation to heat the one or more soluble beverage ingredients, the RF heating is applied at a frequency of 27.12MHz and/or for a duration of from 10 seconds to 1 minute, preferably for a duration of 20 to 30 seconds.

10. The method according to any of the preceding claims, wherein the mass is cooled to room temperature or below and then removed from the mould.

11. The method according to any of the preceding claims, wherein the one or more soluble beverage ingredients have a moisture content of from 0.1 to 6wt%, preferably 2 to 5wt%.

12. A soluble beverage mass having a weight of from 2 to 20 g obtainable by the method of any of the preceding claims, wherein the soluble beverage mass has a porosity of from 10 to 50% and a homogeneity such that the porosity variance across a cross-section of the mass does not vary by more than +/-20%.

13. A method of preparing a beverage, the method comprising contacting the soluble beverage mass of claim 12, or produced according to the method of any of claims 1 to 11, with an aqueous medium.

## Patentansprüche

1. Verfahren zum Herstellen einer löslichen Getränkemasse mit einem Gewicht von 2 bis 20 g, wobei das Verfahren umfasst:
Bereitstellen eines oder mehrerer löslicher Getränkeinhaltsstoffe in Pulverform,
Bereitstellen einer vorgeheizten Form mit einem Formhohlraum, vorgeheizt auf eine Oberflächentemperatur, die größer als die Tg des einen oder der mehreren löslichen Getränkeinhaltsstoffe ist,
Füllen des Formhohlraums mit dem einen oder den mehreren löslichen Getränkeinhaltsstoffen und
Komprimieren des einen oder der mehrerer löslichen Getränkeinhaltsstoffe in dem Formhohlraum zum Bilden eines löslichen Getränkematerials,
wobei der eine oder die mehreren löslichen Getränkeinhaltsstoffe von 15 bis 120 Sekunden lang in dem Formhohlraum verbleiben.

2. Verfahren nach Anspruch 1, wobei:
(i) das Verfahren ferner das Anwenden von HF-Strahlung zum Erhitzen der löslichen Getränkeinhaltsstoffe in dem Formhohlraum umfasst; und/oder
(ii) der eine oder die mehreren löslichen Getränkeinhaltsstoffe in Pulverform vor dem Füllen in den Formhohlraum vorgewärmt werden.

3. Verfahren nach Anspruch 1 oder Anspruch 2, wobei die Form und/oder der Verschluss auf eine Temperatur von 60 bis 120 °C erhitzt wird.

4. Verfahren nach einem der vorstehenden Ansprüche, wobei der eine oder die mehreren löslichen Inhaltsstoffe eine Schüttdichte von 0,2 bis 0,5 g/cm³ aufweisen und der Schritt des Komprimierens das Volumen der löslichen Getränkeinhaltsstoffe um 30 bis 60 % des Ausgangsvolumens reduziert; oder
wobei der eine oder die mehreren löslichen Inhaltsstoffe eine Schüttdichte von mehr als 0,5 g/cm³ bis 1 g/cm³ aufweisen und der Schritt des Komprimierens das Volumen der löslichen Getränkeinhaltsstoffe um 10 bis 50 % des Ausgangsvolumens reduziert.

5. Verfahren nach einem der vorstehenden Ansprüche, wobei der eine oder die mehreren löslichen Getränkeinhaltsstoffe 30 bis 100 Sekunden lang in dem Formhohlraum gehalten werden.

6. Verfahren nach einem der vorstehenden Ansprüche, wobei der eine oder die mehreren löslichen Getränkeinhaltsstoffe umfassen:
(i) löslichen Kaffee, Kaffeeweißer, Milchfeststoffe, Zucker, Aromen, Farbstoffe, Schaummittel, Kakao oder Schokolade oder eine Mischung aus zwei oder mehreren davon; und/oder
(ii) eine schäumende lösliche Getränkezutat, die eingeschlossenes Druckgas enthält und/oder
(iii) zwei oder mehr Inhaltsstoffe und wobei die löslichen Getränkeinhaltsstoffe separate Schichten oder separate Abschnitte innerhalb der Masse bilden und/oder
(iv) kein Bindemittel umfassen.

7. Verfahren nach einem der vorstehenden Ansprüche, wobei der Formhohlraum eine Kontaktfläche zum Inkontaktbringen des einen oder der mehreren löslichen Getränkeinhaltsstoffe aufweist und wobei die Kontaktfläche des Formhohlraums aus einem dielektrischen Material gebildet ist und/oder wobei die Form ein dielektrisches Material umfasst und mit einer Auskleidung oder Beschichtung zum Bilden der Kontaktfläche versehen ist, vorzugsweise wobei das dielektrische Material PVDF oder ein Polymer umfasst, das Rußpartikel enthält.

8. Verfahren nach einem der vorstehenden Ansprüche, wobei der Schritt des Komprimierens der einen oder mehreren löslichen Getränkeinhaltsstoffe in dem Formhohlraum nach oder zusammen mit dem Anwenden von HF-Strahlung zum Erhitzen der löslichen Getränkeinhaltsstoffe in dem Formhohlraum durchgeführt wird.

9. Verfahren nach einem der vorstehenden Ansprüche, wobei in dem Schritt des Anwendens von HF-Strahlung zum Erhitzen des einen oder der mehreren löslichen Getränkeinhaltsstoffe das HF-Erhitzen bei einer Frequenz von 27,12 MHz und/oder für eine Dauer von 10 Sekunden bis 1 Minute, vorzugsweise für eine Dauer von 20 bis 30 Sekunden angewendet wird.

10. Verfahren nach einem der vorstehenden Ansprüche, wobei die Masse auf Raumtemperatur oder darunter abgekühlt und dann aus der Form entfernt wird.

11. Verfahren nach einem der vorstehenden Ansprüche, wobei der eine oder die mehreren löslichen Getränkeinhaltsstoffe einen Feuchtigkeitsgehalt von 0,1 bis 6 Gew.-%, vorzugsweise von 2 bis 5 Gew.-% aufweisen.

12. Lösliche Getränkemasse mit einem Gewicht von 2 bis 20 g, erhältlich durch das Verfahren nach einem der vorstehenden Ansprüche, wobei die lösliche Getränkemasse eine Porosität von 10 bis 50 % und eine derartige Homogenität aufweist, dass die Porositätsvariation über einen Querschnitt der Masse um nicht mehr als +/-20 % variiert.

13. Verfahren zur Zubereitung eines Getränks, wobei das Verfahren das Inkontaktbringen der löslichen Getränkemasse nach Anspruch 12 oder einer nach dem Verfahren eines der Ansprüche 1 bis 11 hergestellten Masse mit einem wässrigen Medium umfasst.

## Revendications

1. Procédé de production d'une masse de boisson soluble d'un poids de 2 à 20 g, le procédé comprenant :
la fourniture d'un ou plusieurs ingrédients de boisson solubles sous forme de poudre,
la fourniture d'un moule préchauffé ayant une cavité de moule préchauffée à une température de surface supérieure à la Tg du ou des ingrédients de boisson solubles,
le chargement de la cavité de moule avec celui ou ceux des ingrédients de boisson solubles, et
la compression du ou des ingrédients de boisson solubles dans la cavité de moule pour former une masse de boisson soluble,
dans lequel le ou les ingrédients de boisson solubles sont retenus à l'intérieur de la cavité de moule de 15 à 120 secondes.

2. Procédé selon la revendication 1, dans lequel :
(i) le procédé comprend en outre l'application d'un rayonnement RF pour chauffer les ingrédients de boisson solubles dans la cavité de moule ; et/ou
(ii) le ou les ingrédients de boisson solubles sous forme de poudre sont préalablement réchauffés avant chargement dans la cavité de moule.

3. Procédé selon la revendication 1 ou la revendication 2, dans lequel le moule et/ou la fermeture sont chauffés à une température allant de 60 à 120 °C.

4. Procédé selon l'une quelconque des revendications précédentes, dans lequel le ou les ingrédients solubles ont une masse volumique apparente allant de 0,2 à 0,5 g/cm³ et l'étape de compression réduit le volume des ingrédients de boisson solubles à raison de 30 à 60 % du volume initial ; ou
dans lequel le ou les ingrédients solubles ont une masse volumique apparente supérieure à 0,5 g/cm³ à 1 g/cm³ et l'étape de compression réduit le volume des ingrédients de boisson solubles à raison de 10 à 50 % du volume initial.

5. Procédé selon l'une quelconque des revendications précédentes, dans lequel le ou les ingrédients de boisson solubles sont retenus à l'intérieur de la cavité de moule pendant 30 à 100 secondes.

6. Procédé selon l'une quelconque des revendications précédentes, dans lequel le ou les ingrédients de boisson solubles comprennent :
(i) café soluble, crème, matières solides du lait, sucre, arômes, colorants, agent moussant, cacao ou chocolat, ou un mélange de deux ou plusieurs de ceux-ci ; et/ou
(ii) un ingrédient de boisson soluble moussant contenant du gaz sous pression piégé et/ou
(iii) deux ingrédients ou plus et dans lequel les ingrédients de boisson solubles forment des couches séparées ou des portions séparées à l'intérieur de la masse et/ou
(iv) ne comprennent pas de liant.

7. Procédé selon l'une quelconque des revendications précédentes, dans lequel la cavité de moule a une surface de contact pour mise en contact du ou des ingrédients de boisson solubles et dans lequel la surface de contact de la cavité de moule est formée d'un matériau diélectrique et/ou dans lequel le moule comprend un matériau diélectrique et est pourvu d'un garnissage ou revêtement pour former la surface de contact, de préférence dans lequel le matériau diélectrique comprend du PVDF ou un polymère contenant des particules de noir de carbone.

8. Procédé selon l'une quelconque des revendications précédentes, dans lequel l'étape de compression du ou des ingrédients de boisson solubles dans la cavité du moule est effectuée après ou conjointement avec l'application d'un rayonnement RF pour chauffer les ingrédients de boisson solubles dans la cavité de moule.

9. Procédé selon l'une quelconque des revendications précédentes, dans lequel, dans l'étape d'application de rayonnement RF pour chauffer le ou les ingrédients de boisson solubles, le chauffage par RF est appliqué à une fréquence de 27,12 MHz et/ou pendant une durée allant de 10 secondes à 1 minute, de préférence pendant une durée de 20 à 30 secondes.

10. Procédé selon l'une quelconque des revendications précédentes, dans lequel la masse est refroidie à température ambiante ou à une température inférieure, puis retirée du moule.

11. Procédé selon l'une quelconque des revendications précédentes, dans lequel le ou les ingrédients de boisson solubles ont une teneur en humidité allant de 0,1 à 6 % en poids, de préférence 2 à 5 % en poids.

12. Masse de boisson soluble ayant un poids allant de 2 à 20 g pouvant être obtenue par le procédé selon l'une quelconque des revendications précédentes, dans laquelle la masse de boisson soluble a une porosité allant de 10 à 50 % et une homogénéité telle que la variance de la porosité sur une section transversale de la masse ne varie pas de plus de +/-20 %.

13. Procédé de préparation d'une boisson, le procédé comprenant la mise en contact de la masse de boisson soluble selon la revendication 12, ou produite selon le procédé selon l'une quelconque des revendications 1 à 11, avec un milieu aqueux.
